Europäisches Patentamt

European Patent Office

Office européen des brevets

(19)

(11) Publication number: **0 150 164 B1**

(12) **EUROPEAN PATENT SPECIFICATION**

(45) Date of publication of patent specification: **07.10.92**  (51) Int. Cl.⁵: **C10J 3/02**

(21) Application number: **85850006.9**

(22) Date of filing: **07.01.85**

(54) **Method for gasification of coal and/or coke.**

(30) Priority: **10.01.84 SE 8400092**

(43) Date of publication of application:
**31.07.85 Bulletin 85/31**

(45) Publication of the grant of the patent:
**07.10.92 Bulletin 92/41**

(84) Designated Contracting States:
**AT BE CH DE FR GB IT LI LU NL SE**

(56) References cited:
**EP-A- 0 011 887**     **EP-A- 0 072 457**
**DE-C- 390 936**       **FR-A- 803 293**
**GB-A- 1 024 341**     **GB-A- 2 003 496**
**US-A- 4 153 426**

(73) Proprietor: **Berg, Tore Gustav Owe**
**Backavägen 18**
**S-81040 Hedesunda(SE)**

(72) Inventor: **Berg, Tore Gustav Owe**
**Backavägen 18**
**S-81040 Hedesunda(SE)**

(74) Representative: **Rosenquist, Per Olof et al**
**Bergenstrahle & Lindvall AB, P.O. Box 17704**
**S-118 93 Stockholm(SE)**

Rank Xerox (UK) Business Services

## Description

This invention pertains to a method for gasification of coal and/or coke whereby the coal and/or coke is gasified by reaction with added water vapor in the presence of added catalyst and the gas is purified with respect to constituents that are detrimental to the environment whereafter the gas may be burned. The purification pertains especially to sulfur and heavy metals.

Fossil fuels contain on the average about 2% of sulfur. The sulfur content of coals is usually between 0.5 and 2.5%, depending upon the location of the mine. The sulfur in coals has the forms of organic compounds, usually up to 0.5%, and the mineral pyrite, $FeS_2$. Coals also contain other metals, especially heavy metals, e.g. mercury. When coals are burned in a furnace or a fireplace in the conventional manner, their constituents are converted into oxides that are emitted into the flue gas. The sulfur dioxide, $SO_2$, is converted in the atmosphere or on the ground to sulfuric acid, $H_2SO_4$. At the present yearly rate of burning of fossil fuels, about 6 billion tons, the surface of the earth receives about 1 million tons of $H_2SO_4$ per day. In principle, $H_2SO_4$ can be bound in calcium sulfate, gypsum, $CaSO_4$, by means of added lime, but in practice this is hardly possible to the required or even to a significant extent. The metal oxides have the form of small particles, less than 1 $\mu$ in diameter. They cannot be removed from the flue gas by known methods. Some heavy metals, e.g. tungsten and molybdenum, have gaseous oxides.

The flue gases from the combustion of fossil fuels have caused, and continue to cause, enormous harms, some known ones and, presumably, some unknown ones. The most conspicuous ones are mercury poisoning of fish in lakes, and sick, dying and dead trees in forests. The sulfuric acid may be neutralized by the lime in the soil. When the soil becomes acidic and acidification damage is noticeable, the lime is spent, at first, of course, in a surface layer in which trees and other plants have their roots. In this condition the soil cannot endure further addition of acid. Among the effects of $H_2SO_4$ is the dissolution of aluminum in the silicates that constitute clay. In this process are formed poisonous aluminum sulfate, $Al_2(SO_4)_3$, that is soluble in the surface water and in the ground water, and silicon dioxide, $SiO_2$, sand. If the $Al_2(SO_4)_3$ is precipitated with lime, it is converted into colloidal aluminum oxide, $Al_2O_3$, dispersed in the surface water and in the ground water. The destruction of the environment by flue gases from fossil fuels is an immediate and imminent threat to the conditions for life and of the basis for its support.

The harm already done cannot be undone. But continued destruction can be prevented by the use of a suitable combustion technology. It must satisfy the following requirements:

a. No emission at all of sulfur and heavy metals.

b. The sulfur must be separated as elementary sulfur, not in the form of chemical compound.

c. Satisfaction of requirements a. and b. must be accompanied by economic advantage to the user of the technology in comparison with known combustion technologies.

The invention meets these requirements.

A solid fuel, e.g. coal, does not burn as such but only after gasification whereupon the gas burns. Since the gas burns, it is reducing. The combustion takes place in oxidizing air. Gasification and combustion thus occur under different circumstances. By conducting the two processes separately one can give each process the most favorable circumstances. In addition, the gas can be purified before its combustion.

Coal is converted into gas by three main methods. The products called city gas, producer gas, and water gas, respectively.

The city gas is produced by heating coal in the absence of air. Compounds of carbon and hydrogen in the coal then give off a gas that consists after purification of 40-56% $H_2$, 24-30%, $CH_4$, 4-8% CO, 4-10% $N_2$, 2-3% heavy hydrocarbons, 1-2% $CO_2$, 1% $O_2$. Before purification the gas contains sulfur in the form of hydrogen sulfide, $H_2S$. It is taken up by bog ore as FeS that decomposes in the air to yield bog ore and elementary sulfur, called flowers of sulfur. The removal of sulfur is practically complete. After degasing of the coal, the residue is coke. In a gasworks a ton of coal yields about 350 $m^3$ of gas and 700 kg of coke. The process is conducted in a chamber, the wall of which is heated at the outside by burning the product gas or of producer gas from the product coke. In a typical case the temperature in the chamber is about 1100°C, and that at the outside of the wall is about 1200°C.

The producer gas is produced by incomplete burning of coke in air. The composition is approximately 55% $N_2$, 20% CO, 13% $H_2$, 8% $CO_2$, 3% $CH_4$. The gas is produced near the point of use so that the heat content of the gas can be utilized as well as its heat of combustion, e.g. in the Siemens-Martin process.

The water gas is produced from coke and water vapor

$$C + H_2O \rightarrow CO + H_2 \qquad (1)$$

This reaction is used in the method according to the invention. It is treated extensively in the following.

In practice the raw materials contain contaminants that affect reactions and products. As a consequence, all coals are not suitable for the production of, e.g. city gas. Also as a consequence, the three gases are mixtures of one another in different proportions. Some of the reactions that are part of the gas production are catalyzed by metals which are contained in the coal as impurities. This effect, as well as the influence of impurities in general, has been insufficiently investigated. According to the invention, coal and/or coke is gasified according to (1) with added catalyst in addition to that present as an impurity.

In order for the reaction with $H_2O$ to occur according to (1), it is necessary that $H_2O$ be decomposed

$$H_2O \rightarrow H + OH \qquad (2)$$

This decomposition is catalyzed by any hydrogen-replacing metal. It is further required that the reaction yield the products stated in (1). This requires a catalyst of a more specific kind. One such metal is iron, but similar metals, especially cobalt and nickel, can, in principle, be used too. However, according to the invention, iron is preferable.

With iron as a catalyst the reaction (1) takes place within the austenite domain of iron, according to the phase diagram for the system Fe-C in the temperature range 728-1490°C, suitably at about 1150°C where the solubility of carbon in iron is greatest. The iron is then solid, suitably in particulate form. It is true that liquid iron dissolves still more carbon, but the surface area for the reaction is then smaller, and the reaction is slower. With the iron in suitable form and quantity the reaction is rapid enough at the temperature mentioned and at atmospheric pressure.

The iron may be added as metal or as iron oxide. In the former case the iron becomes partially oxidized by $H_2O$, in the latter case the iron oxide becomes partially reduced by $H_2$. On this subject the following comments may be made.

Iron and other metals are oxidized by OH, e.g. as formed according to (2). Oxygen contributes to the oxidation only after conversion into OH

$$O_2 + 2H \rightarrow H_2O_2 \qquad (3)$$

$$H_2O_2 \rightarrow 2OH \qquad (4)$$

This requires a catalyst that decomposes $H_2O_2$. Many metals, including iron, decompose $H_2O_2$ according to (4). As a consequence of this reaction mechanism, first published by Wieland (Ber. 46 (1913) 3327), metals are oxidized in oxygen or air only in the presence of $H_2O$. Even under these conditions, metals that do not decompose $H_2O_2$, e.g. aluminum, are oxidized only to the extent that they contain metals, e.g. Fe and Cu, that decompose $H_2O_2$.

The reverse reaction, reduction of metal oxides, is effected by atomic hydrogen alone. It is formed in, e.g. the reaction (2), or from $H_2$ by the reaction

$$H_2 + OH \rightarrow H + H_2O \qquad (5)$$

In particular, iron oxide is reduced according to the formula

$$FeO + 2H \rightarrow Fe + H_2O \qquad (6)$$

In order for this reaction to continue, the $H_2O$ formed in the adsorbed state must be removed. The heat of desorption of $H_2O$ is comparatively great, 18 kcal/mole. When the reduction is conducted in a bed, readsorption takes place at other points in the bed. The removal of $H_2O$ is then rate-determining. Rapid removal of $H_2O$ is effected by addition of C that reacts with $H_2O$ according to (1). This requires, however, that the metal catalyses the reaction (1). Reduction by means of coal or coke requires, therefore, that the metal catalyses the reaction (1). Consequently, only such metals, namely iron, nickel, and cobalt, can be produced from their oxides with the aid of coal or coke. Other metals, e.g. aluminum and copper, which do not catalyse (1), cannot be produced by reduction of their oxides with the aid of coal or coke.

It follows from what has just been said, that gasification of coal or coke according to (1) in the presence of iron or iron oxide, and reduction of iron oxide in the presence of coal or coke, are elements of one and the same reaction mechanism. According to the invention, these two elements are combined in one and the same process in one and the same reactor. The composition of the charge of the reactor, especially the proportions of coal and/or coke, iron and/or iron oxide, and water vapor, are then chosen such that the desired proportions of the products, gas and iron, are obtained.

An essential advantage of this combination is that it allows adjustment to variations in the demand. In summer time the need of gas for heating is less. This can be compensated by a greater production of iron that can be stored. Since the gas can be stored in a gasholder, as is city gas, the variations over the day can be compensated. By the use of a catalyst the process is accelerated, and the volume of the plant and with it the capital cost, is reduced.

The iron produced in the process described has the form of sponge iron. It contains unreduced iron oxide and also sulfur, taken up from the coal or coke. It can be completely reduced by treatment with purified gas, that does not contain sulfur, and without addition of coal or coke. In this process sulfur is removed from the sponge iron in the form of $H_2S$ that is returned to the purification plant. Under suitably chosen conditions phosphorus and carbon can also be removed from the sponge iron.

The gas formed in the gasification can be purified by known methods. Condensable constituents are removed by cooling in heat exchanger. Sulfur, in the form of $H_2S$, is taken up by bog ore. The purification is done essentially by the method used in gasworks for the production of city gas.

This invention thus pertains to a process for the gasification of coal and/or coke in a reactor, in combination with the purification of the gas obtained with respect to sulfur, in the form of hydrogen sulfide, vapors of metals and metal oxides, and other constituents, the purification being effected by known methods, e.g. by means of cooling and treatment with bog ore, characterized by the gasification of the coal and/or coke in the presence of a catalyst, especially a metal from the group iron, cobalt and nickel, and water in the form of water vapor that is injected in the reactor, and also characterized thereby that, depending upon the proportions of the quantities of coal and/or coke, metal, metal oxide, and water vapor introduced in the reactor, gas and/or metal are/is taken out from the reactor, the metal in the form of, e.g., sponge metal.

The gasification of coal and/or coke according to the invention is effected at a temperature in the range of about 728-1490°C, preferably at about 1150°C, and essentially at atmospheric pressure.

In a preferred form of the method according to the invention, the catalyst is particulate iron or particulate iron oxide.

In one form of the method according to the invention the metal that is obtained from the reactor is purified with respect to sulfur and also with respect to phosphorus and/or carbon by treatment with purified gas.

The purified gas produced according to the invention may be used in electric power plants without the need of filter for fly ash and a tall smoke stack with attendant energy losses. Also, losses by corrosion are reduced.

The purified gas may evidently be used for other purposes, e.g. in metallurgical processes. Thus, one may effect final reduction of the produced sponge iron to iron powder by treatment with the purified gas, thereby, as already mentioned, also removing sulfur, phosphorus and carbon.

Another area of application of the purified gas is in households, e.g. for heating.

The method according to the invention meets the requirements a. and b. as has been explained at length above. The requirement c. may warrant additional comments.

The use of a catalyst for the gasification of the coal and/or coke, greatly increases the rate of the process. As a consequence, the site of the reactor is reduced correspondingly and thereby its capital costs.

When a gas is the sole product, and when iron is the sole product, catalyst and coal and/or coke are costs that must be kept low. When gas and iron are both useful products and produced together, these restrictions do not apply. As a consequence more favorable operating conditions can be chosen. For example, iron ore is more rapidly reduced in a highly reducing atmosphere, i.e. at an excess of coal and/or coke and steam as compared to the theoretical minimum. As a consequence, the size of the plant is reduced for a given capacity with consequent reduction of capital costs. Furthermore, the optimum capacity of the plant, e.g. 2 million tons per year of a blast furnace, is greatly reduced, again with a reduction of capital costs.

Capital costs are largely determined by the degree of utilization of the plant. The combination of the two products, gas and iron, allows a high degree of utilization as compared to either product alone. As a consequence capital costs are reduced. Furthermore, the combination of the two products, each of which can be stored, allows a minimum of surplus capacity, again at a reduction of capital costs.

The purified gas can be used for purposes where the not purified gas cannot. The purified gas therefore has a correspondingly higher price in the market.

## Claims

1. Method for the gasification of coal and/or coke in a reactor, in combination with purification of the gas obtained with respect to sulfur, vapors of metals and metal oxides by known methods, e.g. by cooling and treatment with bog ore, whereby the coal and/or coke are/is gasified in the presence of solid iron as a catalyst added as particulate iron and/or particulate iron oxide, and added water vapor, the gasification being effected at a temperature in the range of 728 - 1490°C, preferably at about 1150°C, and essentially at atmospheric pressure, the iron produced in the process, when iron oxide is added, being in the form of sponge metal which if purified, may be purified with respect to sulfur and also to phosphorus and/or carbon by treatment with purified gas.

## Patentansprüche

1.  Verfahren zum Vergasen von Kohle und/oder Koks in einem Reaktor in Kombination mit einer Reinigung des so erzeugten Gases von Schwefel, Metalldämpfen und Metalloxiden mittels bekannter Verfahren, z.B. durch Kühlen und Behandeln mit Sumpferz, wobei die Kohle und/oder Koks bei Vorhandensein von festem Eisen als Katalysator vergast wird/werden, wobei das Eisen als partikelförmiges Eisen und/oder partikelförmiges Eisenoxid zugesetzt wird, und bei Vorhandensein von zugesetztem Wasserdampf, wobei die Vergasung bei einem Temperaturbereich von 728 - 1490°Cerfolgt, vorzugsweise bei etwa 1150°C, und im wesentlichen bei Umgebungsdruck, wobei das in dem Prozess erzeugte Eisen im Falle des Zusetzens von Eisenoxid die Form eines Metallschwamms hat, welcher, falls er gereinigt wird, hinsichtlich Schwefel wie auch Phosphor und/oder Kohlenstoff durch Behandeln mit gereinigtem Gas würde gereinigt werden können.

**Revendications**

1.  Procédé pour la gazéification de charbon et/ou de coke dans un réacteur, en combinasion avec la purification du gaz obtenu par des procédés connus en ce qui concerne le soufre, les vapeurs métalliques et les oxydes métalliques par example par refroidissement et traitement par un produit mineral a base de fer terreux, le charbon et/ou le coke étant ainsi gaséifiés en présence de fer solide comme catalyseur, ajouté sous forme de fer en particules et/ou d'oxyde de fer en particules, avec addition de vapeur d'eau, la gazéification étant effectuée à une température comprise entre 728 et 1490°C, de préférence à 1150°C environ, essentiellement à la pression atmosphérique, le fer produit au cours du processus, quand on ajoute de l'oxyde de fer, étant sous forme d'éponge métallique qui, si purifiée, pourrait être purifiée en ce qui concerne le soufre ainsi que le phosphore et/ou le carbone par traitement par un gaz purifié.